# EUROPEAN PATENT APPLICATION

(11) **EP 4 269 350 A1**
(43) Date of publication of application: **01.11.2023**
(21) Application number: 21909890.2
(22) Date of filing: 08.10.2021
(51) Int. Cl.: C01G 25/00, H01M 4/36, H01M 4/38

(54) **COMPOSITE PARTICLES FOR NON-AQUEOUS ELECTROLYTE SECONDARY BATTERY, AND NON-AQUEOUS ELECTROLYTE SECONDARY BATTERY**

(30) Priority: 23.12.2020 JP 2020213999
(71) Applicant: Panasonic Intellectual Property Management Co., Ltd., Osaka 571-0057 (JP)
(72) Inventor: KAMIDAIRA, Toshiki, Kadoma-shi, Osaka 571-0057 (JP); ASANO, Taisuke, Kadoma-shi, Osaka 571-0057 (JP); SEKI, Naoki, Kadoma-shi, Osaka 571-0057 (JP)
(74) Representative: Novagraaf International SA
(86) International application number: PCT/JP2021/037376
(87) International publication number: WO 2022/137732

(57) **Abstract**

Composite particles for a non-aqueous electrolyte secondary battery include a lithium zirconate phase, and a silicon phase dispersed in the lithium zirconate phase. In the composite particles, a content proportion MZr of zirconium in all elements other than oxygen is, for example, 14.6 mass% or more and 54.6 mass% or less, and a content proportion MLi of lithium in all elements other than oxygen is, for example, 0.9 mass% or more and 10.4 mass% or less.

## Description

### [Technical Field]

The present disclosure mainly relates to composite particles that can be used as a negative electrode active material for a non-aqueous electrolyte secondary battery.

### [Background Art]

Non-aqueous electrolyte secondary batteries, especially lithium ion secondary batteries, because of their high voltage and high energy density, have been expected as promising power sources for small consumer applications, power storage devices, and electric cars. With increasing demand for a higher battery energy density, a material containing silicon (Si) that forms an alloy with lithium has been expected to be utilized as a negative electrode active material having a high theoretical capacity density.

Patent Literature 1 proposes a negative electrode active material (hereinafter sometimes referred to as LSX) comprising a lithium silicate phase represented by Li_{2z}SiO_{2+z} where 0 < z < 2, and silicon particles dispersed in the lithium silicate phase.

### [Citation List]

### [Patent Literature]

Patent Literature 1: International Publication WO 2016/35290

### [Summary of Invention]

The LSX, as compared to SiOₓ in which silicon particles are dispersed in the SiO₂ phase, has a small irreversible capacity, and can improve the initial charge-discharge efficiency.

However, the lithium silicate phase in the LSX, in some cases, may cause a side reaction with the non-aqueous electrolyte. Therefore, the reduction of the amount of gas generated during storage of the battery has been required.

In view of the above, one aspect of the present disclosure relates to composite particles for a non-aqueous electrolyte secondary battery, including: a lithium zirconate phase, and a silicon phase dispersed in the lithium zirconate phase.

Another aspect of the present disclosure relates to a non-aqueous electrolyte secondary battery, including: a positive electrode; a negative electrode; and a non-aqueous electrolyte, wherein the negative electrode includes the above-described composite particles.

According to the present disclosure, it is possible to reduce the amount of gas generated during storage of a non-aqueous electrolyte secondary battery.

### [Brief Description of Drawings]

[FIG. 1] A diagram showing an example of an XRD pattern of composite particles according to one embodiment of the present disclosure.
[FIG. 2] A schematic cross-sectional view of composite particles according to one embodiment of the present disclosure.
[FIG. 3] A partially cut-away schematic oblique view of a non-aqueous electrolyte secondary battery according to one embodiment of the present disclosure.

### [Description of Embodiments]

### [Negative electrode active material for non-aqueous electrolyte secondary battery]

Composite particles for a non-aqueous electrolyte secondary battery according to an embodiment of the present disclosure include a lithium zirconate phase, and a silicon phase dispersed in the lithium zirconate phase. The composite particles (hereinafter sometimes referred to as "LZX particles") can be used as, for example, a negative electrode active material with high capacity to be contained in a negative electrode for a non-aqueous electrolyte secondary battery.

The lithium zirconate phase in the LZX particles is more excellent in acid resistance and alkali resistance than the lithium silicate phase in the LSX particles in which a silicon phase is dispersed in the lithium silicate phase. Therefore, in the LZX particles, a side reaction with the acid component or the alkali component, which are produced through a side reaction and contained in the non-aqueous electrolyte, is less likely to occur than in the LSX particles. As a result, gas generation due to a side reaction during storage of the battery is suppressed.

The LZX particles, practically, may not contain either lithium silicate or SiO₂. The sum of the contents of lithium silicate and SiO₂ in the LZX particles may be, for example, 3 mass% or less.

In the LZX particles, it is preferable that a content proportion MZr of zirconium in all elements other than oxygen is 14.6 mass% or more and 54.6 mass% or less, and a content proportion MLi of lithium in all elements other than oxygen is 0.9 mass% or more and 10.4 mass% or less. When the zirconium content proportion MZr and the lithium content proportion MLi are within the ranges as above, a zirconate phase having excellent stability and ion conductivity can be easily obtained. The above stability includes both chemical stability (acid resistance and alkali resistance) and thermal stability. The content proportion MZr of zirconium is more preferably 29.0 mass% or more and 54.6 mass% or less.

In addition, in view of easily obtaining a lithium zirconate phase having excellent stability and ion conductivity, the ratio of the content proportion MLi of lithium to the content proportion MZr of zirconium (i.e., MLi/MZr) calculated with the content proportion MZr of zirconium taken as 100 is preferably 4.7 or greater and 23.2 or less. The content proportion MLi of lithium is, on the precondition that the MLi/MZr satisfies the above numerical range, more preferably 1.8 mass% or more and 9.7 mass% or less.

In view of achieving both high capacity and improved cycle characteristics, in the LZX particles, the content proportion MSi of silicon in all elements other than oxygen is, for example, preferably 40 mass% or more and 90 mass% or less, more preferably 42 mass% or more and 82 mass% or less. The above content proportion MSi of silicon is the amount of Si constituting the silicon phase in the LZX particles.

In an X-ray diffraction (XRD) pattern of the composite particles obtained by XRD measurement of the composite particles, a peak attributed to the lithium zirconate phase can be observed around 2θ = x°. The x° is at least one selected from the group consisting of 18.6°, 26.5° and 36.5°. For the X ray for the XRD measurement, Kα ray of Cu is used. In the present specification, around x° means, for example, being within the range of x ± 1°.

A ZrO₂ phase may be dispersed in the lithium zirconate phase. The fine, highly crystalline ZrO₂ phase can be distributed like islands in the matrix of the zirconate phase. Since the ZrO₂ phase has high hardness, expansion and cracking of the zirconate phase associated with expansion and contraction of the silicon phase tends to be suppressed. In addition, since the ZrO₂ phase is highly stable, side reactions during storage of the battery tends to be suppressed, leading to reduced gas generation. In the X-ray diffraction pattern of the composite particles obtained by X-ray diffraction measurement, a peak attributed to the ZrO₂ phase can be observed around 2θ = 30.7°. The content of the ZrO₂ phase in the LZX particles is, for example, 0 mass% or more and 10 mass% or less.

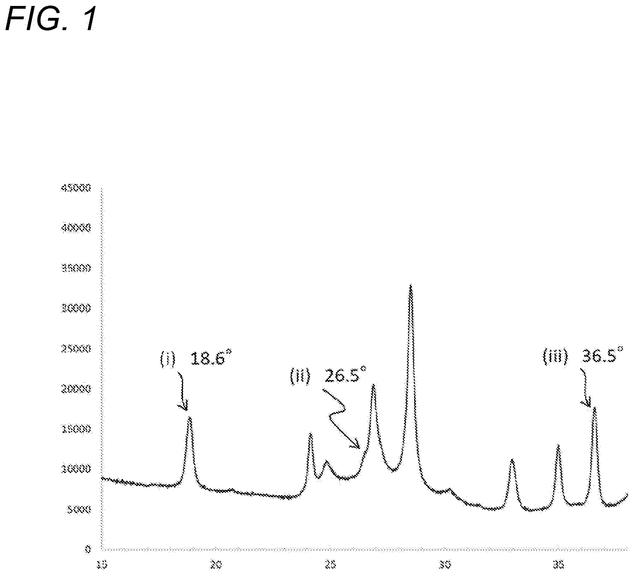

Here, FIG. 1 shows an example of an XRD pattern of composite particles (later-described Example 4 (LZX4)) of one embodiment of the present disclosure.

In LZX, a peak attributed to the Si (111) plane of the silicon phase is observed around 2θ = 28°. Also, a peak attributed to the ZrO₂ phase is observed around 2θ = 30.7°.

Peaks belonging to Li₆Zr₂O₇, Li₂ZrO₃, and Li_{5.52}Zr_{2.62}O₈ of the lithium zirconate phase are observed around 2θ = 18.6°, around 2θ = 26.5°, and around 2θ = 36.5° (peaks of (i), (ii), and (iii) in FIG. 1).

The composite particles have a sea-island structure in which fine silicon phases are dispersed like islands in a sea of the lithium zirconate phase. The lithium zirconate phase has favorable ion conductivity, and through the lithium zirconate phase, absorption and release of lithium ions by the silicon phase are smoothly carried out. By controlling the amount of silicon phase dispersed in the lithium zirconate phase, a higher capacity can be achieved. The expansion and contraction of the silicon phases can be relaxed by the lithium zirconate phase. Therefore, high battery capacity and improved cycle characteristics can be both easily achieved. In view of relaxing the expansion and contraction of the silicon phases, the lithium zirconate phase may be amorphous.

In the composite particles, a plurality of primary particles each containing a lithium zirconate phase and a silicon phase are bonded together, constituting a secondary particle. The average particle diameter of the composite particles (secondary particles) is, for example, 1 µm or more and 25 µm or less, and may be 4 µm or more and 15 µm or less. In the particle diameter ranges as above, the stress that occurs along with the changes in volume of the composite particles during charge and discharge tends to be relaxed, and favorable cycle characteristics are likely to be obtained. The surface area of the composite particles also can be appropriate, and the reduction in capacity due to a side reaction with the non-aqueous electrolyte is also suppressed. The average particle diameter of the composite particles means a particle diameter (volume average particle diameter) at 50% cumulative volume in a particle size distribution measured by a laser diffraction scattering method. As the measurement instrument, for example, "LA-750" available from Horiba, Ltd. (HORIBA) can be used. When the surface of the composite particles is covered with a conductive layer, since the thickness of the conductive layer is practically so small as not to influence the average particle diameter of the composite particles, the average particle diameter of the composite particles with the conductive layer may be regarded as the average particle diameter of the composite particles.

The composite particles can be taken out from the battery in the following manner. First, the battery in a fully discharged state is disassembled, to take out an electrode including composite particles (e.g., negative electrode), and the electrode is washed with anhydrous ethyl methyl carbonate or dimethyl carbonate, to remove the non-aqueous electrolyte component. As described later, the electrode has an electrode current collector and an electrode mixture layer supported on its surfaces. The electrode mixture layer is peeled off from the current collector, and ground in a mortar, to obtain a sample powder. Next, the sample powder is dried in a dry atmosphere for 1 hour, and immersed in a weakly boiled 6M hydrochloric acid for 10 minutes, to remove elements derived from components other than the composite particles. Next, the sample powder is washed with ion-exchanged water, and filtered, followed by drying at 200 °C for 1 hour. This is followed by heating to 900 °C in an oxygen atmosphere to remove the conductive layer, and thus, the composite particles only can be isolated. The fully discharged state means a state in which the depth of discharge (DOD) is 90% or more (the state of charge (SOC) is 10% or less).

### (Lithium zirconate phase)

The lithium zirconate contains lithium (Li), zirconium (Zr), and oxygen (O). The atomic ratio O to Zr (i.e., O/Zr) in the lithium zirconate is, for example, 2.0 or greater and 6.0 or less. When the atomic ratio of O/Zr is within the ranges as above, it is advantageous in the stability and the ion conductivity of the lithium zirconate phase.

The lithium zirconate phase preferably contains at least one selected from the group consisting of Li₆Zr₂O₇, Li₂ZrO₃, and Li_{5.52}Zr_{2.62}O₈, as a major component. Herein, the "major component" refers to a component that occupies 50 mass% or more of the mass of the whole lithium zirconate phase, and may occupy 70 mass% or more.

The lithium zirconate phase may further contain another element M, in addition to Li, Zr, and O. The element M may be at least one selected from the group consisting of, for example, sodium (Na), potassium (K), calcium (Ca), magnesium (Mg), boron (B), phosphorus (P), and lanthanum (La). When the lithium zirconate phase contains the element M, the stability and the lithium ion conductivity of the lithium zirconate phase are further improved. Moreover, the side reaction due to contact between the lithium zirconate phase and the non-aqueous electrolyte is suppressed. In view of the chemical resistance to non-aqueous electrolyte and the structural stability of the lithium zirconate phase, the element M preferably includes at least one selected from the group consisting of P and B.

The element M may be forming a compound. The compound may be, for example, an oxide of the element M, or a zirconate of the element M, depending on the kind of the element M. In the lithium zirconate phase, the content of the element M is, for example, 0.3 mol% or more and 3 mol% or less, relative to the total amount of the elements other than oxygen.

The lithium zirconate phase may further contain a very small amount of chromium (Cr), nickel (Ni), manganese (Mn), copper (Cu), molybdenum (Mo), or other elements.

The contents of Li, Zr, and the element M in the lithium zirconate phase can be measured, for example, by analyzing a cross section of the electrode mixture layer.

First, the battery in a fully discharged state is disassembled, to take out the electrode, and the electrode is washed with anhydrous ethyl methyl carbonate or dimethyl carbonate, to remove the non-aqueous electrolyte component, and dried. This is followed by processing with a cross section polisher (CP) to obtain a cross section of the electrode mixture layer. Next, a scanning electron microscope (SEM) is used to observe the cross section of the electrode mixture layer.

The content of each element can be then determined by any of the following methods. From the content of each element, the composition of the lithium zirconate phase can be calculated.

### <EDX>

From a cross-sectional backscattered electron image of the electrode mixture layer, 10 composite particles having a maximum diameter of 5 µm or more are randomly selected, to perform an elemental mapping analysis by energy dispersive X-ray (EDX) on each particle. The area occupied by the target element is calculated using an image analysis software. The observation magnification is desirably 2000 to 20,000 times. The measured values of the area occupied by the predetermined element contained in the 10 particles are averaged. From the obtained average value, the content of the target element can be calculated.

Desirable cross-sectional SEM-EDX analysis measurement conditions are shown below.

<SEM-EDX measurement conditions>
   Processing apparatus: SM-09010 (Cross Section Polisher) available from JEOL
   Processing conditions: accelerating voltage 6 kV
   Current value: 140 µA
   Degree of vacuum: 1×10⁻³ to 2×10⁻³ Pa
   Measuring apparatus: Electron microscope SU-70 available from HITACHI
   Acceleration voltage during analysis: 10 kV
   Field: Free mode
   Probe current mode: Medium
   Probe current range: High
   Anode Ap.: 3
   OBJ Ap.: 2
   Analysis area: 1 µm square
   Analysis software: EDAX Genesis
   CPS: 20,500
   Lsec: 50
   Time constant: 3.2
<AES>

From a cross-sectional backscattered electron image of the electrode mixture layer, 10 composite particles having a maximum diameter of 5 µm or more are randomly selected, to perform a qualitative/quantitative analysis on each particle using an Auger electron spectroscopy (AES) analyzer (e.g., JAMP-9510F, available from JEOL Corporation). The measurement conditions may be set, for example, the acceleration voltage to be 10 kV, the beam current to be 10 nA, and the analysis region to be 20 µmφ. The contents of a predetermined element contained in the 10 particles are averaged, to determine its content.

The EDX and AES analyses are performed within 1 µm or more inward from the peripheral edge of the cross section of the composite particle.

### <ICP>

A sample of the composite particles is completely dissolved in a heated acid solution (a mixed acid of hydrofluoric acid, nitric acid, and sulfuric acid), and the residue of dissolution, carbon, is removed by filtration. Then, the obtained filtrate is analyzed by inductively coupled plasma emission spectroscopy (ICP), to measure a spectral intensity of each element. Subsequently, using a commercially available standard solution of the element, a calibration curve is drawn, from which the content of each element in the composite particles is calculated.

Other techniques can be used for quantification of each element, such as electron microanalyzer (EPMA), laser ablation ICP mass analysis (LA-ICP-MS), and X-ray photoelectron spectroscopy (XPS).

The contents of B, Na, K, and A1 in the composite particles can be quantitatively analyzed in accordance with JIS R3105 (1995) (method for chemical analysis of borosilicate glass).

The content of Ca in the composite particles can be quantitatively analyzed in accordance with JIS R3101 (1995) (methods for chemical analysis of soda-lime-silica glass).

The carbon content in the composite particles may be measured using a carbon/sulfur analyzer (e.g., EMIA-520 available from HORIBA, Ltd.). A sample is weighed out on a magnetic board, to which an auxiliary agent is added. The sample is inserted into a combustion furnace (carrier gas: oxygen) heated to 1350 °C. The amount of carbon dioxide gas generated during combustion is detected by infrared absorption spectroscopy. A calibration curve is obtained using carbon steel (carbon content: 0.49%) available from Bureau of Analysed Samples. Ltd., from which a carbon content in the sample is determined (a high-frequency induction heating furnace combustion and infrared absorption method).

The oxygen content in the composite particles may be measured using an oxygen/nitrogen/hydrogen analyzer (e.g., EGMA-830, available from HORIBA, Ltd.). A sample is placed in a Ni capsule, which is put together with Sn pellets and Ni pellets serving as a flux, into a carbon crucible heated at a power of 5.75 kW, to detect a released carbon monoxide gas. From a calibration curve obtained using a standard sample Y₂O₃, an oxygen content in the sample is determined (an inert gas melting and non-dispersive infrared absorption method).

The amount of Si constituting the silicon phase in the composite particles can be quantified using Si-NMR.

Desirable Si-NMR measurement conditions are shown below.

<Si-NMR measurement conditions>
   Measuring apparatus: Solid nuclear magnetic resonance spectrometer (INOVA-400), available from Varian, Inc.
   Probe: Varian 7 mm CPMAS-2
   MAS: 4.2 kHz
   MAS speed: 4 kHz
   Pulse: DD (45° pulse + signal capture time 1H decoupling)
   Repetition time: 1200 sec to 3000 sec
   Observation width: 100 kHz
   Observation center: around -100 ppm
   Signal capture time: 0.05 sec
   Accumulated number of times: 560
   Sample amount: 207.6 mg
<Silicon phase>

The silicon phase is a phase of elementary silicon (Si), and repeatedly absorbs and releases lithium ions thereinto and therefrom during charge and discharge of the battery. The capacity develops through the Faradaic reaction in which the silicon phase is involved. The silicon phase, due to its large capacity, undergoes a great degree of expansion and contraction during charge and discharge. However, since the silicon phase is dispersed in the lithium zirconate phase, the stress due to the expansion and contraction of the silicon phase is relaxed.

The silicon phase can be constituted of a plurality of crystallites. The crystallite size of the silicon phase is preferably 30 nm or less. When the crystallite size of the silicon phase is 30 nm or less, the changes in volume of the silicon phase associated with expansion and contraction during charge and discharge can be reduced, and the cycle characteristics can be further improved. For example, the isolation of a silicon phase caused by the formation of gaps around the silicon phase due to contraction of the silicon phase can be suppressed, and the reduction in the charge-discharge efficiency can be suppressed. The lower limit of the crystallite size of the silicon phase is not limited, but is, for example, 1 nm or more.

The crystallite size of the silicon phase is more preferably 10 nm or more and 30 nm or less, particularly preferably 15 nm or more and 25 nm less. When the crystallite size of the silicon phase is 10 nm or more, the surface area of the silicon phase can be kept small, and the deterioration of the silicon phase accompanied by the generation of irreversible capacity is unlikely to occur. When the crystallite size of the silicon phase is 30 nm or less, the expansion and contraction of the silicon phase can be easily made uniform, the stress generated in the composite particles can be easily relaxed, and the cycle characteristics can be improved. The crystallite size of the silicon phase is calculated from the Scherrer formula, using a half-width of a diffraction peak attributed to the (111) plane of the silicon phase (elementary Si) in an X-ray diffraction pattern.

The silicon phase in the composite particles contained in the battery before initial charge is, for example, particulate. The average particle diameter of the particulate silicon phases is preferably 500 nm or less, more preferably 200 nm or less, furthermore preferably 50 nm or less. After the initial charge, the average particle diameter of the silicon phases is preferably 400 nm or less, more preferably 100 nm or less. By using finer silicon phases, the changes in volume of the composite particles during charge and discharge are reduced, and the structural stability of the composite particles can be further improved. The average particle diameter of the silicon phases is measured by observing a cross-sectional SEM image of a composite particle. Specifically, the average particle diameter of the silicon phases is obtained by averaging the maximum diameter of 100 randomly-selected silicon phases.

In view of achieving a higher capacity, the content of the silicon phase in the composite particles is preferably 30 mass% or more, more preferably 35 mass% or more, further more preferably 55 mass% or more. In this case, the diffusibility of lithium ions is favorable, and excellent load characteristics can be obtained. On the other hand, in view of improving the cycle characteristics, the content of the silicon phase in the composite particles is preferably 95 mass% or less, more preferably 75 mass% or less, further more preferably 70 mass% or less. In this case, the exposed surface of the silicon phase without being covered with the silicate phase decreases, and the reaction between the non-aqueous electrolyte and the silicon phase tends to be suppressed.

### (Conductive layer)

A conductive layer containing a conductive material may be formed on at least part of the surface of the composite particles (secondary particles). This can improve the conductivity of the composite particles. The thickness of the conductive layer is preferably practically so small as not to influence the average particle diameter of the composite particles. In view of reliable conductivity and diffusibility of lithium ions, the thickness of the conductive layer is preferably 1 to 200 nm, more preferably 5 to 100 nm. The thickness of the conductive layer can be measured by cross-sectional observation of the composite particles using a SEM or TEM.

The conductive material is preferably a conductive carbon material. Examples of the conductive carbon material include an amorphous carbon, graphite, graphitizable carbon (soft carbon), and non-graphitizable carbon (hard carbon). In particular, an amorphous carbon is preferred in that a thin conductive layer covering the surface of the composite particles can be easily formed. Examples of the amorphous carbon includes carbon black, calcined pitch, coke, and activated carbon. Examples of the graphite includes natural graphite, artificial graphite, and graphitized mesophase carbon.

### [Method for producing composite particles]

The composite particles are produced by, for example, a production method including the following first to fourth steps.
(First step) A step of obtaining a lithium zirconate which is a raw material (hereinafter sometimes referred to as a raw material zirconate).
(Second step) A step of forming the raw material zirconate and a raw material silicon into a composite so as to allow silicon phases to be dispersed in a zirconate phase, to obtain a composite intermediate.
(Third step) A step of heat-treating the composite intermediate, to obtain a sintered body containing a zirconate phase and silicon phases dispersed in the zirconate phase.
(Fourth step) A step of crushing the sintered body, to obtain composite particles containing a zirconate phase and silicon phases dispersed in the zirconate phase.

### (First step)

The first step includes: for example, a step 1a of mixing a zirconium compound, a lithium compound, and, as needed, a compound containing an element M, to obtain a mixture; and a step 1b of baking the mixture, to obtain a raw material zirconate. The baking in the step 1b is performed, for example, in an oxidizing atmosphere. The baking temperature in the step 1b is preferably 400 °C or higher and 1200 °C or lower, more preferably 800 °C or higher and 1100 °C or lower.

As the zirconium compound, zirconium oxide (ZrO₂), zirconium hydroxide, zirconium carbonate, and the like can be used. The zirconium compound may be used singly or in combination of two or more kinds.

As the lithium compound, lithium carbonate, lithium oxide, lithium hydroxide, lithium hydride, and the like can be used. The lithium compound may be used singly or in combination of two or more kinds.

As the compound containing an element M, an oxide, hydroxide, hydride, halide, carbonate, oxalate, nitrate, sulfate, and the like of the element M can be used. The compound containing an element M may be used singly or in combination of two or more kinds.

In the first step, the zirconium compound not having reacted with the lithium compound in the process of producing a raw material zirconate can remain in the raw material zirconate. When the zirconium compound is used in a larger amount than the lithium compound, the zirconium compound tends to remain. When the zirconium compound remaining in the raw material zirconate is ZrO₂, a ZrO₂ phase dispersed in a lithium zirconate phase can be formed in the finally obtained composite particles.

### (Second step)

The second step has, for example, a step of pulverizing a mixture of the raw material zirconate and a raw material silicon while applying a shearing force to the mixture, to obtain a fine-grained composite intermediate. Here, for example, the raw material zirconate and a raw material silicon are mixed in a predetermined mass ratio, and the mixture is pulverized into fine particles while being stirred, using a pulverizer like a ball mill.

As the raw material silicon, coarse-grained silicon particles of about several µm to several tens of µm in average particle diameter can be used. The finally obtained silicon particles are preferably controlled such that the crystallite size calculated by using the Scherrer formula from the half width of a diffraction peak belonging to the Si (111) plane in an X-ray diffraction pattern is 10 nm or more.

The second step is not limited to the above. For example, without using a pulverizer, silicon nanoparticles and nanoparticles of raw material zirconate may be synthesized, and mixed together.

### (Third step)

The third step has, for example, a step of baking the fine-grained composite intermediate, while applying a pressure to the composite intermediate using a hot press or the like, to obtain a sintered body. The baking of the composite intermediate is performed, for example, in an inert atmosphere (e.g., an atmosphere of argon, nitrogen, etc.). The baking temperature is preferably 450 °C or higher and 1000 °C or lower. Within the above temperature range, fine silicon particles can be easily dispersed in the zirconate phase with low crystallinity. The raw material zirconate is stable in the above temperature range and hardly reacts with silicon. The baking temperature is preferably 550 °C or higher and 900 °C or lower, more preferably 650 °C or higher and 850 °C or lower. The baking time is, for example, 1 hour or more and 10 hours or less.

### (Fourth step)

The fourth step is a step of pulverizing the sintered body to have a desired particle size distribution, to obtain composite particles containing a zirconate phase and silicon phases dispersed in the zirconate phase. The composite particles are pulverized to have an average particle diameter of, for example, 1 to 25 µm.

### (Fifth step)

The method for producing composite particles may further include a fifth step of forming a conductive layer by covering at least part of the surface of the composite particles with a conductive material. The conductive material is preferably electrochemically stable, and is preferably a conductive carbon material. Examples of the method of covering the surface of the composite particles with a conductive carbon material include: a CVD method using a hydrocarbon gas, such as acetylene and methane, as a raw material; and a method in which coal pitch, petroleum pitch, phenolic resin, or the like is mixed with the composite particles and heated, to be carbonized. Alternatively, carbon black may be allowed to adhere to the surface of the composite particles. In the fifth step, for example, a mixture of the composite particles and a conductive carbon material may be heated at a temperature of 700 °C or higher and 950 °C or lower in an inert atmosphere (e.g., an atmosphere of argon, nitrogen, etc.), thereby to form a conductive layer on the surface of the composite particles.

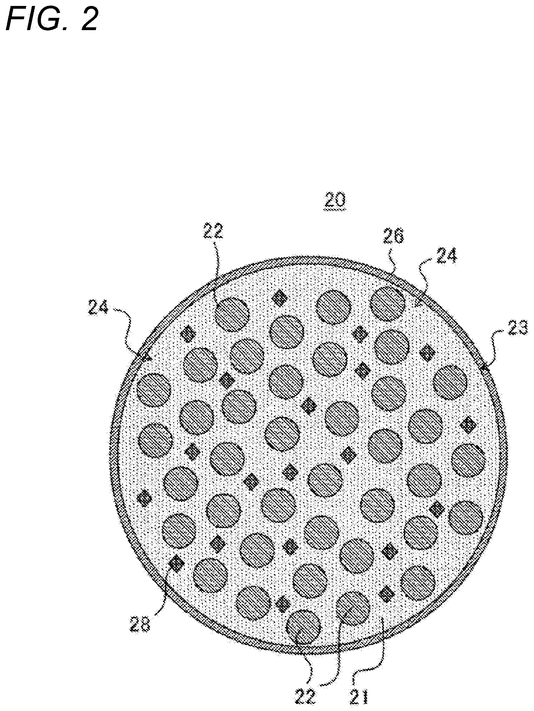

Here, FIG. 2 is a schematic cross-sectional view of a negative electrode active material (composite particles) according to one embodiment of the present disclosure.

A composite particle 20 includes a base particle 23 comprising a secondary particle formed of a plurality of primary particles 24 aggregated together. The base particle 23 (primary particle 24) includes a lithium zirconate phase 21, and silicon phases 22 dispersed in the lithium zirconate phase 21. The base particle 23 has a sea-island structure in which fine silicon phases are dispersed in a matrix of the lithium zirconate phase 21.

In addition, fine ZrO₂ phases 28 can be dispersed in the lithium zirconate phase 21. At least part of the surface of the base particle 23 can be covered with a conductive layer 26. The lithium zirconate phase 21 may contain an element M. With repeated charge and discharge, the particulate silicon phases 22 adjacent to each other can be connected with each other, to form a network of silicon phases.

### [Non-aqueous electrolyte secondary battery]

A non-aqueous electrolyte secondary battery according to an embodiment of the present disclosure has a positive electrode, a negative electrode, and a non-aqueous electrolyte. The negative electrode includes the above-described composite particles.

A detailed description of the non-aqueous electrolyte secondary battery will be given below.

### [Negative electrode]

The negative electrode may have a negative electrode current collector, and a negative electrode mixture layer supported on a surface of the negative electrode current collector. The negative electrode mixture layer can be formed by applying a negative electrode slurry of a negative electrode mixture dispersed in a dispersion medium, onto a surface of the negative electrode current collector, followed by drying. The dry applied film may be rolled as needed. The negative electrode mixture layer may be formed on a surface on one side or both sides of the negative electrode current collector.

The negative electrode mixture contains a negative electrode active material as an essential component, and can contain a binder, a conductive agent, a thickener, and the like as optional components. The negative electrode active material contains at least the above-described composite particles.

The negative electrode active material preferably further includes a carbon material that electrochemically absorbs and releases lithium ions. The composite particles expand and contract in volume associated with charge and discharge. Therefore, increasing the proportion thereof in the negative electrode active material can increase the risk of a contact failure to occur associated with charge and discharge, between the negative electrode active material and the negative electrode current collector. However, by using the composite particles in combination with a carbon material, it becomes possible to achieve excellent cycle characteristics while imparting a high capacity of the silicon particles to the negative electrode. In view of achieving a higher capacity and improved cycle characteristics, the proportion of the carbon material in the sum of the composite particles and the carbon material is preferably 98 mass% or less, more preferably 70 mass% or more and 98 mass% or less, further more preferably 75 mass% or more and 95 mass% or less.

Examples of the carbon material include graphite, graphitizable carbon (soft carbon), and non-graphitizable carbon (hard carbon). In particular, preferred is graphite, in terms of its excellent stability during charge and discharge and small irreversible capacity. The graphite means a material having a graphite-like crystal structure, examples of which include natural graphite, artificial graphite, and graphitized mesophase carbon particles. The carbon material may be used singly or in combination of two or more kinds.

Examples of the negative electrode current collector include a non-porous conductive substrate (e.g., metal foil) and a porous conductive substrate (e.g., mesh, net, punched sheet). The negative electrode current collector may be made of, for example, stainless steel, nickel, a nickel alloy, copper, or a copper alloy. The negative electrode current collector may have any thickness. In view of the balance between high strength and lightweight of the negative electrode, the thickness is preferably 1 to 50 µm, more preferably 5 to 20 µm.

The binder may be a resin material, examples of which include: fluorocarbon resin, such as polytetrafluoroethylene and polyvinylidene fluoride (PVDF); polyolefin resin, such as polyethylene and polypropylene; polyamide resin, such as aramid resin; polyimide resin, such as polyimide and polyamide-imide; acrylic resin, such as polyacrylic acid, methyl polyacrylate, and ethylene-acrylic acid copolymer; vinyl resin, such as polyacrylonitrile and polyvinyl acetate; polyvinyl pyrrolidone; polyether sulfone; and a rubbery material, such as styrene-butadiene copolymer rubber (SBR). The binder may be used singly or in combination of two or more kinds.

Examples of the conductive agent include: carbons, such as acetylene black; conductive fibers, such as carbon fibers and metal fibers; fluorinated carbon; metal powders, such as aluminum; conductive whiskers, such as zinc oxide and potassium titanate; conductive metal oxides, such as titanium oxide; and organic conductive materials, such as phenylene derivatives. The conductive agent may be used singly or in combination of two or more kinds.

Examples of the thickener include: cellulose derivatives (e.g., cellulose ethers), such as carboxymethyl cellulose (CMC) and modified products thereof (including salts such as Na salts), and methyl cellulose; saponificated products of polymers having vinyl acetate units, such as polyvinyl alcohol; and polyethers (e.g., polyalkylene oxide, such as polyethylene oxide). The thickener may be used singly or in combination of two or more kinds.

Examples of the dispersion medium include: water; alcohols, such as ethanol; ethers, such as tetrahydrofuran; amides, such as dimethylformamide; N-methyl-2-pyrrolidone (NMP); and a mixed solvent of these.

### [Positive electrode]

The positive electrode may include a positive electrode current collector, and a positive electrode mixture layer supported on a surface of the positive electrode current collector. The positive electrode mixture layer can be formed by applying a positive electrode slurry of a positive electrode mixture dispersed in a dispersion medium, onto a surface of the positive electrode current collector, followed by drying. The dry applied film may be rolled as needed. The positive electrode mixture layer may be formed on a surface on one side or both sides of the positive electrode current collector. The positive electrode mixture contains a positive electrode active material as an essential component, and can contain a binder, a conductive agent, and the like as optional components. The dispersion medium of the positive electrode slurry may be NMP or the like.

The positive electrode active material may be, for example, a lithium-containing composite oxide. Examples thereof include LiₐCoO₂, LiₐNiO₂, LiₐMnO₂, LiₐCo_{b}Ni_{1-b}O₂, LiₐCo_{b}Me_{1-b}O_{c}, LiₐNi_{1-b}Me_{b}O_{c}, LiₐMn₂O₄, LiₐMn_{2-b}Me_{b}O₄, LiMePO₄, and Li₂MePO₄F, where Me is at least one selected from the group consisting of Na, Mg, Sc, Y, Mn, Fe, Co, Ni, Cu, Zn, Al, Cr, Pb, Sb, and B. Here, a = 0 to 1.2, b = 0 to 0.9, and c = 2.0 to 2.3. The value a representing the molar ratio of lithium is subjected to increase and decrease during charge and discharge.

In particular, preferred is a lithium-nickel composite oxide represented by LiₐNi_{b}Me_{1-b}O₂, where Me is at least one selected from the group consisting of Mn, Co, and Al, 0 < a ≤ 1.2, and 0.3 ≤ b ≤ 1. In view of achieving a higher capacity, preferably, 0.85 ≤ b < 1. In view of the stability of the crystal structure, more preferred is LiₐNi_{b}Co_{c}Al_{d}O₂ containing Co and Al as elements represented by Me, where 0 < a ≤ 1.2, 0.85 ≤ b < 1, 0 < c < 0.15, 0 < d ≤ 0.1, and b+c+d = 1.

The binder and the conductive agent may be like those exemplified for the negative electrode. The conductive agent may be graphite, such as natural graphite and artificial graphite.

The form and the thickness of the positive electrode current collector may be respectively selected from the forms and the ranges corresponding to those of the negative electrode current collector. The positive electrode current collector may be made of, for example, stainless steel, aluminum, an aluminum alloy, or titanium.

### [Non-aqueous electrolyte]

The non-aqueous electrolyte contains a non-aqueous solvent, and a lithium salt dissolved in the non-aqueous solvent. The concentration of the lithium salt in the non-aqueous electrolyte is preferably, for example, 0.5 mol/L or more and 2 mol/L or less. By controlling the lithium salt concentration within the range as above, a non-aqueous electrolyte having excellent ion conductivity and moderate viscosity can be obtained. The lithium salt concentration, however, is not limited to the above.

Examples of the non-aqueous solvent include cyclic carbonic acid esters, chain carbonic acid esters, cyclic carboxylic acid esters, and chain carboxylic acid esters. The cyclic carbonic acid esters are exemplified by propylene carbonate (PC) and ethylene carbonate (EC). The chain carbonic acid esters are exemplified by diethyl carbonate (DEC), ethyl methyl carbonate (EMC), and dimethyl carbonate (DMC). The cyclic carboxylic acid esters are exemplified by γ-butyrolactone (GBL) and γ-valerolactone (GVL). The chain carboxylic acid esters are exemplified by methyl formate, ethyl formate, propyl formate, methyl acetate, ethyl acetate, propyl acetate, methyl propionate, ethyl propionate, and propyl propionate. The non-aqueous solvent may be used singly or in combination of two or more kinds.

Examples of the lithium salt include: LiClO₄, LiBF₄, LiPF₆, LiAlCl₄, LiSbF₆, LiSCN, LiCF₃SO₃, LiCF₃CO₂, LiAsF₆, LiB₁₀Cl₁₀, lithium lower aliphatic carboxylate, LiCl, LiBr, LiI, borates, and imides. Examples of the borates include lithium bis(1,2-benzenediolate(2-)-O,O') borate, lithium bis(2,3-naphthalenediolate(2-)-O,O') borate, lithium bis(2,2'-biphenyldiolate(2-)-O,O') borate, and lithium bis(5-fluoro-2-olate-1-benzenesulfonate-O,O') borate. Examples of the imides include lithium bisfluorosulfonyl imide (LiN(FSO₂)₂), lithium bis(trifluoromethanesulfonyl)imide (LiN(CF₃SO₂)₂), lithium trifluoromethanesulfonyl nonafluorobutanesulfonyl imide (LiN(CF₃SO₂)(C₄F₉SO₂)), and lithium bis(pentafluoroethanesulfonyl)imide (LiN(C₂F₅SO₂)₂). Preferred among them is LiPF₆. The lithium salt may be used singly or in combination of two or more kinds.

### [Separator]

Usually, it is desirable to interpose a separator between the positive electrode and the negative electrode. The separator is excellent in ion permeability and has moderate mechanical strength and electrically insulating properties. The separator may be, for example, a microporous thin film, a woven fabric, or a nonwoven fabric. The separator is preferably made of, for example, polyolefin, such as polypropylene or polyethylene.

In an exemplary structure of the non-aqueous electrolyte secondary battery, an electrode group formed by winding the positive electrode and the negative electrode with the separator interposed therebetween is housed together with the non-aqueous electrolyte in an outer body. The structure is not limited thereto, and a different form of electrode group may be adopted. For example, a stacked-type electrode group formed by stacking the positive electrode and the negative electrode with the separator interposed therebetween may be adopted. The non-aqueous electrolyte secondary battery may be in any form, such as cylindrical type, prismatic type, coin type, button type, or laminate type.

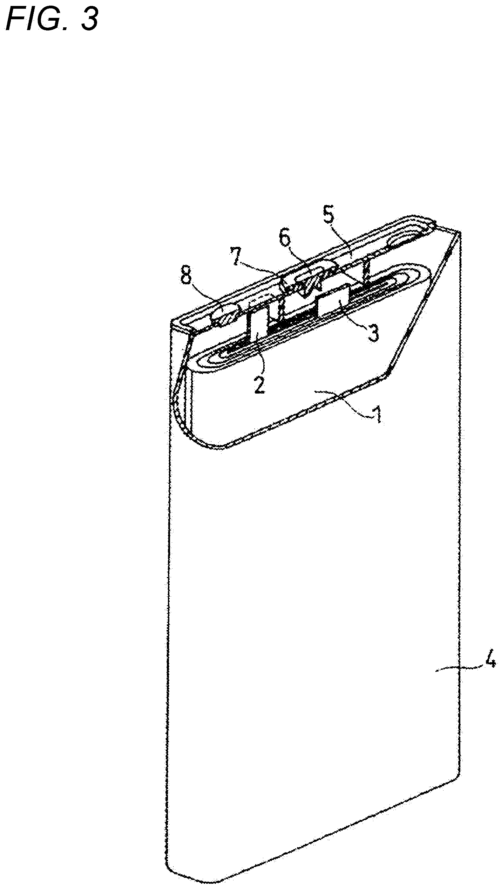

In the following, a structure of a prismatic non-aqueous electrolyte secondary battery which is an example of a non-aqueous electrolyte secondary battery according to the present disclosure will be described with reference to FIG. 3.

The battery includes a bottomed prismatic battery case 4, and an electrode group 1 and a non-aqueous electrolyte housed in the battery case 4. The electrode group 1 has a long negative electrode, a long positive electrode, and a separator interposed therebetween and preventing them from directly contacting with each other. The negative electrode current collector of the negative electrode is electrically connected, via a negative electrode lead 3, to a negative electrode terminal 6 provided at a sealing plate 5. The negative electrode terminal 6 is electrically insulated from the sealing plate 5 by a resin gasket 7. The positive electrode current collector of the positive electrode is electrically connected, via a positive electrode lead 2, to the back side of the sealing plate 5. In other words, the positive electrode is electrically connected to the battery case 4 serving as a positive electrode terminal. The sealing plate 5 is fitted at its periphery to the opening end of the battery case 4, and the fitted portion is laser-welded. The injection port for non-aqueous electrolyte is provided in the sealing plate 5 and is closed with a sealing plug 8 after injection.

The present disclosure will be specifically described below with reference to Examples and Comparative Examples. It is to be noted, however, the present invention is not limited to the following Examples.

### <Examples 1 to 6>

### [Preparation of composite particles (LZX particles)]

### (First step)

Raw material lithium zirconates (LZX particles) A1 to A6 were prepared by mixing ZrO₂ and Li₂CO₃, and baking the mixture in air at 950 °C for 10 hours. In the mixture, the molar ratio of ZrO₂ to Li₂CO₃ was set such that the mass ratio of MI,i to MZr (MLi/MZr) calculated with the content proportion MZr of zirconium taken as 100 was as shown in Table 1. The raw material lithium zirconate was pulverized to have an average particle diameter of 10 µm.

### (Second step)

Next, the raw material lithium zirconate (average particle diameter: 10 µm) and a raw material silicon (3N, average particle diameter: 10 µm) were mixed. In the mixture, the mass ratio of the raw material lithium zirconate to the raw material silicon was set such that the mass ratio of Zr to Si was as shown in Table 1.

The mixture was placed in a pot (made of SUS, volume: 500 mL) of a planetary ball mill (P-5, available from Fritsch Co., Ltd.), together with 24 SUS balls (diameter: 20 mm). In the pot with the lid closed, the mixture was pulverized at 200 rpm for 50 hours in an inert atmosphere.

### (Third step)

Next, the powdered mixture was taken out in an inert atmosphere, which was then baked at 800 °C for 4 hours, in an inert atmosphere, with a pressure applied by a hot press, to give a sintered body of the mixture.

### (Fourth step)

The obtained sintered body was crushed, and passed through a 40-µm mesh, to give composite particles.

### (Fifth step)

The composite particles were mixed with coal pitch (MCP250, available from JFE Chemical Corporation). The mixture was baked at 800 °C for 5 hours in an inert atmosphere, to form a conductive layer containing a conductive carbon material on the surface of the composite particles. The covering amount of the conductive layer was set to 5 mass%, relative to the total mass of the composite particles and the conductive layer. Then, using a sieve, composite particles (LZX particles in which a silicon phase is dispersed in a lithium zirconate phase) with an average particle diameter of 5 µm having a conductive layer were obtained.

FIG. 1 shows an XRD pattern of LZX4. In XRD patterns of LZX particles 1 to 6 (hereinafter sometimes referred to as LZX1 to 6) of Examples 1 to 6 obtained by XRD measurement, peaks belonging to a silicon phase, a lithium zirconate phase, and a ZrO₂ phase were confirmed. The crystallite size of the silicon phase in the LZX particles determined by the already-described method was 15 nm.

The Li content proportion MLi, the Si content proportion MSi, and the Zr content proportion MZr in the LZX particles were determined by the already-described method. The values of respective content proportions are shown in Table 1.

### [Production of negative electrode]

The composite particles having a conductive layer and graphite were mixed in a mass ratio of 5:95, and used as a negative electrode active material. To a negative electrode mixture containing the negative electrode active material, a Na salt of CMC, and SBR in a mass ratio of 97.5:1:1.5, water was added, and stirred, to prepare a negative electrode slurry. Next, the negative electrode slurry was applied onto a surface of a copper foil, and the applied film was dried, and then rolled, to produce a negative electrode with a negative electrode mixture layer having a density of 1.5 g/cm³ formed on both sides of the copper foil.

### [Production of positive electrode]

To a positive electrode mixture containing lithium cobaltate, acetylene black, and PVDF in a mass ratio of 95:2.5:2.5, NMP was added, and stirred, to prepare a positive electrode slurry. Next, the positive electrode slurry was applied onto a surface of an aluminum foil, and the applied film was dried, and then rolled, to produce a positive electrode with a positive electrode mixture layer having a density of 3.6 g/cm³ formed on both sides of the aluminum foil.

### [Preparation of non-aqueous electrolyte]

To a mixed solvent containing EC and DEC in a volume ratio of 3:7, LiPF₆ was dissolved at a concentration of 1.0 mol/L, to prepare a non-aqueous electrolyte.

### [Fabrication of non-aqueous electrolyte secondary battery]

The positive and negative electrodes, each with a tab attached, were wound with a separator interposed therebetween, thereby to form an electrode group with the tab positioned at the outermost layer. The electrode group was inserted into an outer body made of aluminum laminated film and dried under vacuum at 105 °C for 2 hours. Then, the non-aqueous electrolyte was injected, and the opening of the outer body was sealed. In this way, batteries A1 to A6 corresponding to LZX1 to 6 of Examples 1 to 6 were obtained.

### <Comparative Example 1>

In the second step, a lithium silicate was used in place of the raw material lithium zirconate, and the lithium silicate (average particle diameter: 10 µm) and a raw material silicon (3N, average particle diameter: 10 µm) were mixed in a mass ratio of 50:50. The lithium silicate was prepared by mixing SiO₂ and Li₂CO₃ in a molar ratio of SiO₂:Li₂CO₃ = 70:30, and baking the mixture in air at 950 °C for 10 hours. The raw material silicate was pulverized to have an average particle diameter of 10 µm.

Except for the above, in the same manner as in Example 1, composite particles having a conductive layer (LSX particles in which a silicon phase is dispersed in a lithium silicate phase) were prepared.

In an XRD pattern of the LSX particles obtained by XRD measurement, peaks belonging to a lithium silicate phase (Li₂Si₂O₅ and Li₂SiO₃) and a silicon phase were confirmed. The crystallite size of the silicon phase in the LSX particles was 15 nm.

A battery B 1 was fabricated in the same manner as in Example 1, except that the LSX particles having a conductive layer were used in place of the LZX particles having a conductive layer.

### <Comparative Example 2>

In the second step, ZrO₂ was used in place of the raw material lithium zirconate, and the ZrO₂ (average particle diameter: 10 µm) and a raw material silicon (3N, average particle diameter: 10 µm) were mixed such that the mass ratio of Zr to Si was as shown in Table 1. In the subsequent steps, an attempt was made to obtain composite particles, but the silicon phase was not able to be dispersed in zirconia, and composite particles were not able to be synthesized.

### <Comparative Example 3>

In the first step, an attempt was made to synthesize lithium zirconate (LZX7) by mixing ZrO₂ and Li₂CO₃ such that the mass ratio of Li to Zr was as shown in Table 1, but due to insufficient formation of lithium zirconate, a multiphase mixture was produced. An attempt was made to obtain composite particles using the LZX7 particles in the subsequent step, but granulation was difficult.

The batteries A1 to A6 and B1 obtained above were subjected to initial charge and discharge, and then charged, by the following method.

### [Initial charge-discharge efficiency]

### <Charge>

At 25 °C, a constant-current charge was performed at a current of 1 It (800 mA) until the voltage reached 4.2 V, and then a constant-voltage charge was performed at a voltage of 4.2 V until the current reached 1/20 It (40 mA).

### <Discharge>

After the rest for 10 minutes, at 25 °C, a constant-current discharge was performed at 1 It (800 mA) until the voltage reached 2.75 V

Each battery in a charged state was stored at 80 °C for 3 days, and the amount of gas generated in the battery was measured by the Archimedes method. Specifically, the increase in volume of the battery due to gas generation was measured. The value of the amount of gas generated in each battery is shown as a relative value, with the value of the amount of gas generated in the battery B1 of Comparative Example 1 taken as 100. The evaluation results are shown in Table 1.

**[Table 1]**

| | Oxide phase | Si (mass%) | Li (mass%) | Zr (mass%) | MLi/MZr | Amount of gas generated |
|---|---|---|---|---|---|---|
| B1 | LSX | 96.0 | 4.0 | 0 | - | 100 |
| B2 | ZrO₂ | 62.3 | 0 | 37.7 | 0 | - |
| B3 | LZX7 | 65.7 | 8.5 | 25.7 | 33.2 | - |
| A1 | LZX1 | 42.9 | 2.9 | 54.3 | 5.3 | 81 |
| A2 | LZX2 | 44.8 | 9.7 | 45.5 | 21.3 | 81 |
| A3 | LZX3 | 63.0 | 1.8 | 35.1 | 5.3 | 87 |
| A4 | LZX4 | 64.8 | 6.2 | 29.0 | 21.3 | 87 |
| A5 | LZX5 | 80.7 | 1.0 | 18.3 | 5.3 | 93 |
| A6 | LZX6 | 81.9 | 3.2 | 14.9 | 21.3 | 93 |

In the batteries A1 to A6 using LZX particles, the amount of gas generated was smaller than that in the battery B1 using LSX particles. Especially in the batteries A1 to A4, the amount of gas generated was small.

### [Industrial Applicability]

The non-aqueous electrolyte secondary battery of the present disclosure is useful as a main power source for mobile communication devices, portable electronic devices, and similar other devices.

### [Reference Signs List]

- 1: electrode group
- 2: positive electrode lead
- 3: negative electrode lead
- 4: battery case
- 5: sealing plate
- 6: negative electrode terminal
- 7: gasket
- 8: sealing plug
- 20: composite particle
- 21: lithium zirconate phase
- 22: silicon phase
- 23: base particle
- 24: primary particle
- 26: conductive layer
- 28: ZrO₂ phase

## Claims

1. Composite particles for a non-aqueous electrolyte secondary battery, comprising: a lithium zirconate phase, and a silicon phase dispersed in the lithium zirconate phase.

2. The composite particles for a non-aqueous electrolyte secondary battery according to claim 1, wherein
in the composite particles,
a content proportion MZr of zirconium in all elements other than oxygen is 14.6 mass% or more and 54.6 mass% or less, and
a content proportion MLi of lithium in all elements other than oxygen is 0.9 mass% or more and 10.4 mass% or less.

3. The composite particles for a non-aqueous electrolyte secondary battery according to claim 2, wherein a ratio of the content proportion MLi of lithium to the content proportion MZr of zirconium calculated with the content proportion MZr of zirconium taken as 100 is 4.7 or greater and 23.2 or less.

4. The composite particles for a non-aqueous electrolyte secondary battery according to any one of claims 1 to 3, wherein the lithium zirconate phase contains at least one selected from the group consisting of Li₆Zr₂O₇, Li₂ZrO₃, and Li_{5.52}Zr_{2.62}O₈.

5. The composite particles for a non-aqueous electrolyte secondary battery according to any one of claims 1 to 4, wherein
in an X-ray diffraction pattern of the composite particles obtained by X-ray diffraction measurement,
a peak attributed to the lithium zirconate phase appears around 2θ = x°, and
the x° is at least one selected from the group consisting of 18.6°, 26.5° and 36.5°.

6. The composite particles for a non-aqueous electrolyte secondary battery according to any one of claims 1 to 5, wherein a ZrO₂ phase is dispersed in the lithium zirconate phase.

7. The composite particles for a non-aqueous electrolyte secondary battery according to claim 6, wherein
in an X-ray diffraction pattern of the composite particles obtained by X-ray diffraction measurement,
a peak attributed to the ZrO₂ phase appears around 2θ = 30.7°.

8. The composite particles for a non-aqueous electrolyte secondary battery according to any one of claims 1 to 7, wherein the lithium zirconate phase contains at least one element selected from the group consisting of sodium, potassium, calcium, magnesium, boron, phosphorus, and lanthanum.

9. A non-aqueous electrolyte secondary battery, comprising:
a positive electrode; a negative electrode; and a non-aqueous electrolyte, wherein
the negative electrode includes the composite particles for a non-aqueous electrolyte secondary battery of any one of claims 1 to 8.
